Europäisches Patentamt

European Patent Office

Office européen des brevets

(11) Publication number: **0 265 751**

**A1**

# (12) EUROPEAN PATENT APPLICATION

(21) Application number: **87114839.1**

(22) Date of filing: **12.10.87**

(51) Int. Cl.4: **A01F 29/00**

(30) Priority: **30.10.86 IT 2354686 U**

(43) Date of publication of application:
**04.05.88 Bulletin 88/18**

(84) Designated Contracting States:
**AT CH DE LI**

(71) Applicant: **Caravaggi, Gian Lorenzo**
**Via Monte Adamello 20**
**I-25037 Pontoglio Brescia(IT)**

(72) Inventor: **Caravaggi, Gian Lorenzo**
**Via Monte Adamello 20**
**I-25037 Pontoglio Brescia(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Machine for shredding bales of straw, hay and the like.**

(57) Machine for shredding bales of straw, hay and the like, comprising a central body (2) defining a cavity accommodating shredding tools (18) operated by a motor (7) and further comprising a duct (10) for the introduction of the material to be shredded and a duct (13) for discharging it once shredded. The machine (1) has at least one element (16) for cutting the bindings which compact the bale, operated by the motor (7) and arranged upstream relatively to the shredding tools (18).

Fig.3

## MACHINE FOR SHREDDING BALES OF STRAW, HAY AND THE LIKE

The present invention relates to a machine for shredding bales of straw, hay and the like.

Shredding machines are known, particularly for straw, hay and the like, which substantially consist of a central body which defines in its interior a cavity in which a system of shredding tools is accommodated and is moved, generally in a rotary manner, by a motor. The bale of material to be shredded is introduced in said cavity and placed in contact with said shredding tools, the progressive advancement of said bale being produced by the action of the weight of the bale itself, as new portions of shredded material are gradually removed from the cavity. Said cavity is provided with an aspiration duct for ambient air and with a duct for the discharge of said air, as well as with an element generating a continuous flow of air, from the aspiration to the discharge. The continuous flow of air carries the products of the shredding operation and conveys them to their use.

These known types require, before the beginning of the shredding process, an operation which is generally performed manually, and consists of the cutting of the bindings which ensure the compactness of the bale, this fact constituting an obvious disadvantage, since it increases production costs and times, particularly the labour costs.

The manual operation of cutting the bindings which retain the material contained in the bale furthermore produces the further disadvantage of reducing the compactness of said material, making its introduction into the shredding machine difficult and troublesome.

The aim of the present invention is to eliminate the disadvantages described above in known types of shredding machines, by eliminating the need for the manual operation of cutting the bindings which compact the material to be shredded, accordingly reducing production times and costs as well as labor requirements, and making the operation of loading the shredding machine simpler and more convenient.

Within the scope of this aim, an object of the present invention is to provide a device which automatically produces, before the shredding operation, the cutting of the bindings which retain the material contained in the bale.

This aim, as well as this and other objects, are achieved by a machine for shredding bales of straw, hay and the like, comprising a central body which defines a cavity which accommodates shredding tools operated by a motor, a duct for the introduction of the material to be shredded and a duct for the discharge of the shredded products being provided, characterized in that it comprises at least one cutting element for the bindings which compact the material to be shredded contained in said bale, operated by said motor, said at least one cutting element being arranged upstream with respect to said shredding tools with respect to the direction of advancement of said material to be shredded.

Advantageously, said shredding machine comprises discs which support said shredding tools and said at least one cutting element by virtue of coupling means, said discs being operated by said motor.

Conveniently, said machine comprises a plurality of plate-like elements which generate a continuous flow of air from said aspiration duct to said discharge duct, said plate-like elements being driven by said motor.

Further characteristics and advantages of the invention will become apparent from the description of a preferred, but not exclusive, embodiment of the invention, illustrated only by way of non-limitative example in the accompanying drawings, wherein:

figure 1 is a perspective view of the machine according to the invention, with a bale of material to be shredded being introduced in the machine, as illustrated in broken lines, and with another bale of material to be shredded resting on the floor next to the invention;

figure 2 is a top plan view of the invention;

figure 3 is a lateral view of the invention in partial cross section;

figure 4 is an exploded perspective view of the elements contained in the cavity defined by the central body of the machine, consisting of two discs which support the cutting elements and the shredding elements, and of a grill;

figure 5 is a perspective view of the disc which supports the plate-like elements;

figure 6 is a perspective view of the central body of the invention with its lid open.

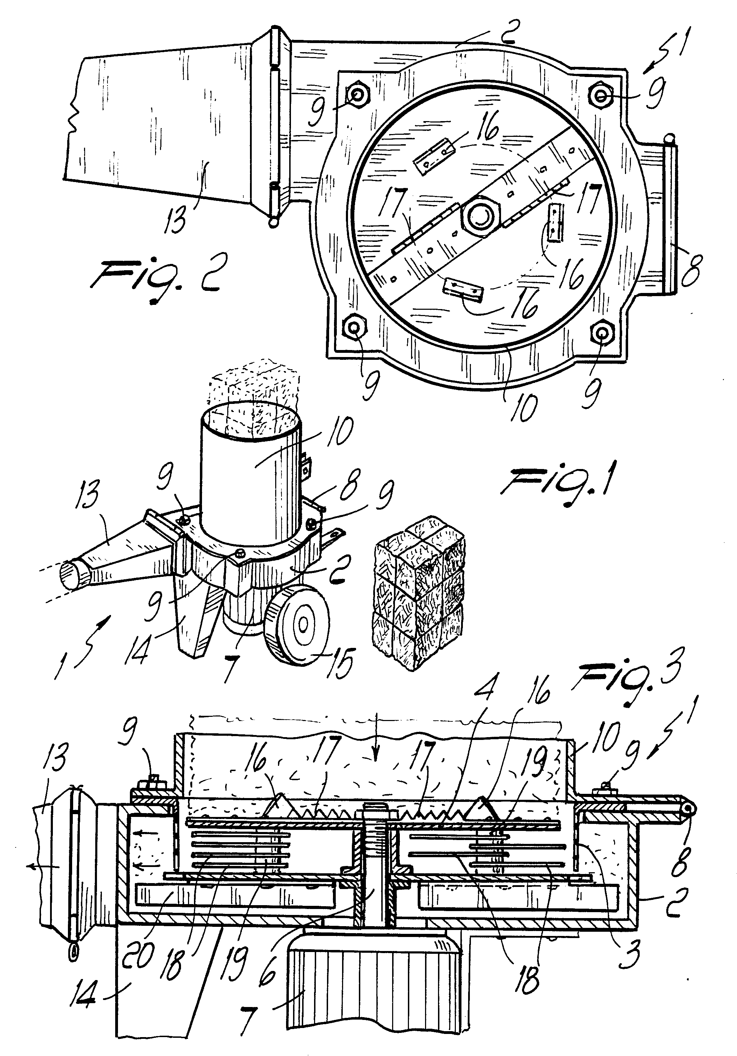

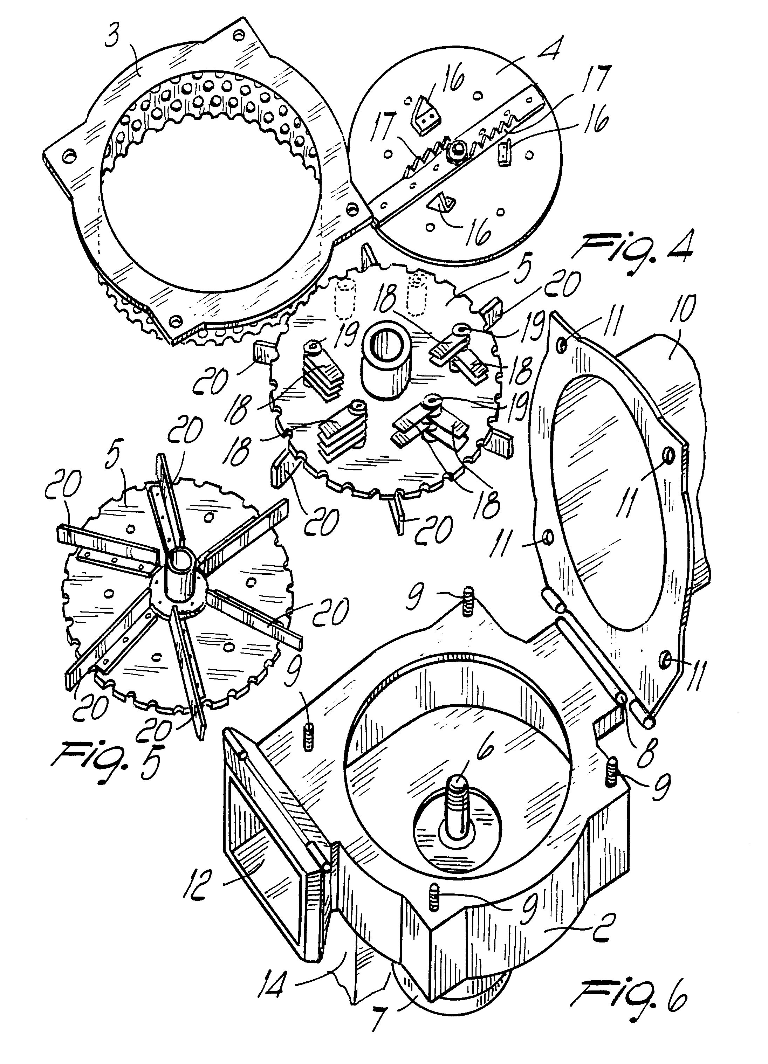

With reference to figure 1 to 6, the invention, generally indicated by the reference numeral 1, comprises a central body 2 which defines in its interior a cavity containing the grill 3 and the discs 4 and 5 rigidly associated with the shaft 6 of the motor 7. The central body 2 supports, by means of the hinge 8 and of the stud bolts 9, the duct for the introduction of the material 10 in which the holes 11 are defined and correspond with the stud bolts 9. The discharge outlet 12 is defined in the central body and connects the cavity with the discharge duct 13. the central body 2 is connected to the support 14 and to the wheels 15. The cutting elements 16 and the decompacting tools 17 are rigidly associated with the disc 4, by welding, bolts, rivets and similar means. The shredding tools 18 are freely rotatable about the pivots 19 fixed to the upper surface of the disc 5 with their axes parallel to the axis of the disc 5. The movement of the shredding tools about the pivots 19 is determined by the action of the centrifugal force and of the impacts with the material to be shredded. The plate-like elements 20 are associated with the lower surface of the disc 5 so as to be rigidly coupled to said disc.

From what has been described, the assembly and the operation of the shredding machine according to the invention are apparent: the bale of straw, hay or the like is introduced through the introduction duct 10, until it reaches the disc 4 which is the first disc it finds in the direction of advancement of the material to be shredded. The cutting elements 16 cut the bindings which compact the material to be shredded, while the decompacting tools 17 begin the operation of shredding the material contained in the lower portion of the bale.

Through the passage area comprised between the outer edge of the disc 4 and the grill 3, the products of this first shredding step reach the region comprised between the disc 4 and the disc 5, the last disc with respect to said direction of advancement, where the shredding tools 18 complete the shredding operation. Subsequently, through the passage area comprised between the outer edge of the disc 5 and the grill 3, the shredded material reaches the region comprised between the lower surface of the disc 5 and the bottom of the cavity defined by the central body. Here the plate-like elements 20 exert a pushing action on the shredded material, concurrently with the traction action exerted on the material by a flow of air generated by the movement of said plate-like elements 20. The grill 3 retains the products of the shredding which have dimensions greater than a preset limit. The shredded material which, passing through the grill 3, reaches the discharge outlet 12, is conveyed to its use through the discharge duct 13.

In practice, the materials employed, as well as the dimensions, may be any according to the requirements.

## Claims

1. Machine for shredding bales of straw, hay and the like, comprising a central body (2) which defines a cavity which accommodates shredding tools (18) operated by a motor (7), a duct (10) for the introduction of the material to be shredded and a duct (13) for the discharge of the shredded products being provided, characterized in that it comprises at least one element (16), for cutting the bindings which compact the material to be shredded contained in said bales, operated by said motor (7), said at least one cutting element (16) being arranged upstream with respect to said shredding tools (18) with respect to the direction of advancement of said material to be shredded.

2. Machine according to claim 1, characterized in that said shredding tools (18) and said at least one cutting element (16) are supported by discs (4,5) operated by said motor (7).

3. Machine according to claims 1 and 2, characterized in that said shredding tools consist of elements (18) pivoted about pivots (19) rigidly associated with said discs (4,5), the axes of said pivots (19) being parallel to the axes of said discs (4,5).

4. Machine according to one or more of the preceding claims, characterized in that it comprises means (20) for generating a flow of air from said introduction duct (10) to said discharge duct (13).

5. Machine according to one or more of the preceding claims, characterized in that said means (20) for generating said flow are actuated by said motor (7).

6. Machine according to one or more of the preceding claims, characterized in that said means for generating said flow consist of substantially plate-like elements (20) rigidly coupled to said discs (4,5).

7. Machine according to claims 1 and 2, characterized in that the first (4) of said discs supports, on its upper surface, decompacting tools (17), said at least one cutting element (16) extending further in an axial direction than said decompacting tools (17).

0 265 751

Fig. 2

Fig. 1

Fig. 3

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | POWER FARMING, vol. 56, August 1977, pages 50-51, Agricultural Press, Sutton, GB; "DANE'S IDEA BRINGS CAUSTIC SODA SOLUTION TO UK" * Page 51, right-hand figure and text * | 1-7 | A 01 F 29/00 |
| Y | FR-A-2 500 407 (ETS. BENAC & FILS SA) | 1-7 | |
| A | GB-A-2 122 480 (WALLEY) | | |
| A | DE-A-1 801 181 (LEY) | | |
| A | EP-A-0 099 561 (LECHNER) | | |
| A | US-A-4 003 502 (BARCELL) | | |

TECHNICAL FIELDS
SEARCHED (Int. Cl.4)

A 01 F
A 01 D
B 02 C

The present search report has been drawn up for all claims

| Place of search | Date of completion of the search | Examiner |
|---|---|---|
| THE HAGUE | 25-01-1988 | DE LAMEILLIEURE D. |